# EUROPEAN PATENT APPLICATION

(11) **EP 4 124 027 A1**
(43) Date of publication of application: **25.01.2023**
(21) Application number: 20925302.0
(22) Date of filing: 18.03.2020
(51) Int. Cl.: H04N 7/18

(54) **PROGRAM, MOBILE TERMINAL, AUTHENTICATION PROCESSING DEVICE, IMAGE TRANSMISSION METHOD, AND AUTHENTICATION PROCESSING METHOD**

(71) Applicant: NEC Corporation, 108-8001 Tokyo (JP)
(72) Inventor: NONAKA, Tetsushi, Tokyo 108-8001 (JP)
(74) Representative: Betten & Resch
(86) International application number: PCT/JP2020/011932
(87) International publication number: WO 2021/186606

(57) **Abstract**

A mobile terminal (10) includes an angle acquisition unit (110) and a transmission unit (120), in addition to an above-described angle sensor (130) and an imaging sensor (140). The angle acquisition unit (110) acquires a value detected by the angle sensor (130), that is, an angle of the mobile terminal (10) in a vertical direction. The transmission unit (120) uses an image generated by the imaging sensor (140) when the angle acquired by the angle acquisition unit (110) satisfies a first reference, as the above-described transmission image. Further, the transmission unit (120) transmits, to an authentication processing apparatus (20), transmission information including at least either of the transmission image or a feature value of a face generated from the transmission image.

## Description

### TECHNICAL FIELD

The some non-limiting embodiments relates to a program, a mobile terminal, an authentication processing apparatus, an image transmission method, and an authentication processing method.

### BACKGROUND ART

In recent years, a face image has been generated in a variety of situations. For example, Patent Document 1 describes that, when imaging a face, a state in which an imaging subject is captured from a front is assumed as an initial position, and generation of an image is permitted when a rotation angle from the initial position is within a predetermined range.

### RELATED DOCUMENT

### PATENT DOCUMENT

[Patent Document 1] Japanese Patent Application Publication No. 2019-12201

### SUMMARY

### TECHNICAL PROBLEM

One of ways for using a face image is face authentication using a feature value of a face. In order to perform face authentication, it is necessary to generate a face image when registering information for a master, and also during the authentication. In order to perform face authentication with high accuracy, it is necessary to generate a high-quality face image in each of the above-described cases. On the other hand, in order to perform face authentication with ease, it is preferable to be able to use a face image generated in a mobile terminal.

One of objects of the some non-limiting embodiments is to select a high-quality face image from among face images generated in a mobile terminal and to use the selected face image.

### SOLUTION TO PROBLEM

According to the some non-limiting embodiments, a program executed in a mobile terminal including an imaging means, and causing the mobile terminal to have:
an angle acquisition function of acquiring an angle of the mobile terminal in a vertical direction; and
a transmission function of transmitting, to a server, transmission information including at least either of a transmission image that is generated by the imaging means, when the angle satisfies a first reference, and includes a human face or a feature value of the face generated from the transmission image
   is provided.

According to the some non-limiting embodiments, a program causing a computer to have:
a function of acquiring, from a mobile terminal including an imaging means, transmission information including at least either of a transmission image including a face or a feature value of the face generated from the transmission image, and an angle of the mobile terminal in a vertical direction when the transmission image is generated; and
a function of executing, when the angle satisfies a reference, authentication processing of the face using the transmission information or registration processing of master information for authentication using the transmission information
   is provided.

According to the some non-limiting embodiments, a mobile terminal including:
an imaging means for generating an image;
an angle acquisition means for acquiring an angle of the mobile terminal in a vertical direction; and
a transmission means for transmitting, to a server, transmission information including at least either of a transmission image that is generated by the imaging unit, when the angle satisfies a first reference, and includes a human face or a feature value of the face generated from the transmission image
   is provided.

According to the some non-limiting embodiments, an authentication processing apparatus including:
an acquisition means for acquiring, from a mobile terminal including an imaging means, transmission information including at least either of a transmission image including a face or a feature value of the face generated from the transmission image, and an angle of the mobile terminal in a vertical direction when the transmission image is generated; and
a processing means for executing, when the angle satisfies a reference, authentication processing of the face using the transmission information or registration processing of master information for authentication using the transmission information
   is provided.

According to the some non-limiting embodiments, an image transmission method, including:
by a mobile terminal,
generating an image, and acquiring an angle of the mobile terminal in a vertical direction; and
transmitting, to a server, transmission information including at least either of a transmission image that is generated by the imaging means, when the angle satisfies a first reference, and includes a human face or a feature value of the face generated from the transmission image
   is provided.

According to the some non-limiting embodiments, an authentication processing method, including:
by a computer,
acquiring, from a mobile terminal including an imaging means, transmission information including at least either of a transmission image including a face or a feature value of the face generated from the transmission image, and an angle of the mobile terminal in a vertical direction when the transmission image is generated; and
executing, when the angle satisfies a reference, authentication processing of the face using the transmission information or registration processing of master information for authentication using the transmission information
   is provided.

### ADVANTAGEOUS EFFECTS

According to the some non-limiting embodiments, it is possible to select a high-quality image from among images generated in a mobile terminal and to use the selected image.

### BRIEF DESCRIPTION OF THE DRAWINGS

The above-described object, other objects, features, and advantages will be further qualified by suitable example embodiments described in the following description, and the following drawings accompanying the example embodiments.

Fig. 1 is a diagram illustrating a use environment of a mobile terminal according to a first example embodiment.
Fig. 2 is a diagram illustrating one example of a functional configuration of the mobile terminal.
Fig. 3 is a diagram illustrating one example of a screen displayed on a display of the mobile terminal.
Fig. 4 is a diagram illustrating a hardware configuration example of the mobile terminal.
Fig. 5 is a flowchart illustrating one example of processing performed by the mobile terminal.
Fig. 6 is a flowchart illustrating a modification example of Fig. 5.
Fig. 7 illustrates one example of a functional configuration of an authentication processing apparatus according to a second example embodiment.
Fig. 8 is a flowchart illustrating one example of processing performed by a mobile terminal and the authentication processing apparatus.

### DESCRIPTION OF EMBODIMENTS

Hereafter, example embodiments are described by using the drawings. Note that, a similar component is marked with a similar reference sign in all the drawings, and description thereof is omitted as appropriate.

### [First Example Embodiment]

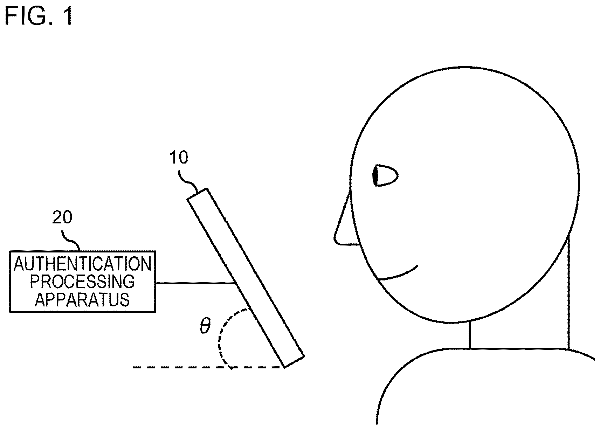

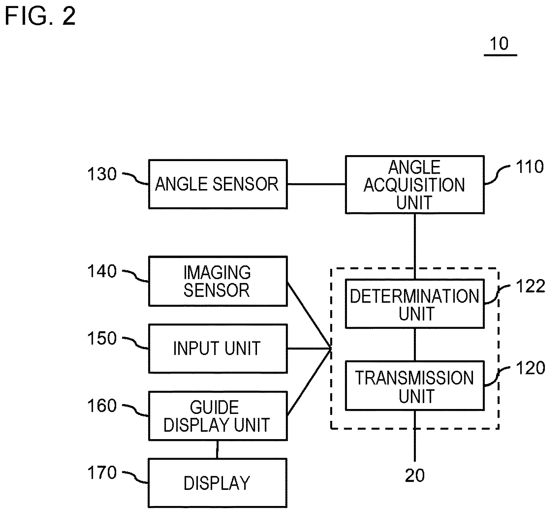

Fig. 1 is a diagram illustrating a use environment of a mobile terminal 10 according to the present example embodiment. The mobile terminal 10 includes an angle sensor 130 (see Fig. 2) and an imaging sensor 140 (see Fig. 2). The angle sensor 130 is, for example, a gyro sensor, and detects an angle θ of the mobile terminal 10 to a horizontal plane. Note that, the angle sensor may also detect an angle of the mobile terminal 10 with a vertical direction as a rotation axis.

A user of the mobile terminal 10 causes the imaging sensor 140 of the mobile terminal 10 to generate an image including a face of the user, in order to use the image in face authentication. The image (hereinafter, referred to as a transmission image) is used in face authentication. For example, a feature value generated by using the transmission image is registered in an authentication processing apparatus 20 as master information for face authentication. Further, when the master information has already been registered in the authentication processing apparatus 20, the transmission image is collated with the master information, in order to authenticate a user.

Herein, when the transmission image is generated in a state where a user's face faces downward, there is a high possibility that light is applied from behind the face, therefore quality of the transmission image deteriorates. In comparison to this, the mobile terminal 10 uses an image when an angle θ satisfies a first reference, as the above-described transmission image. Further, the mobile terminal 10 transmits, to the authentication processing apparatus 20, the transmission image or a feature value generated from the transmission image, as transmission information. As described above, the transmission image or the feature value may be used as master information or used for authenticating a user. Note that, the authentication processing apparatus 20 is one example of a server.

Fig. 2 is a diagram illustrating one example of a functional configuration of the mobile terminal 10. The mobile terminal 10 includes an angle acquisition unit 110 and a transmission unit 120, in addition to the above-described angle sensor 130 and imaging sensor 140. The angle acquisition unit 110 acquires a value detected by the angle sensor 130, that is, an angle of the mobile terminal 10 in a vertical direction. The transmission unit 120 uses an image generated by the imaging sensor 140 when the angle acquired by the angle acquisition unit 110 satisfies the first reference, as the above-described transmission image. Further, the transmission unit 120 transmits, to the authentication processing apparatus 20, transmission information including at least either of the transmission image or a feature value of a face generated from the transmission image.

Herein, one example of a range of the angle θ used as the first reference is equal to or more than 70 degrees and equal to or less than 110 degrees for example, but preferably is equal to or more than 80 degrees and equal to or less than 100 degrees.

The mobile terminal 10 further includes a determination unit 122, an input unit 150, a guide display unit 160, and a display 170. When the angle satisfies the first reference, the determination unit 122 enables an input function for a user to input an instruction for causing the imaging sensor140 to generate an image. For example, the determination unit 122 enables user's input to an imaging button. The input unit 150 acquires information (hereinafter, referred to as input information) indicating a content of input performed by a user to an input device (e.g., a touch panel or a button) of the mobile terminal 10. The guide display unit 160 displays an image generated by the imaging sensor 140 on the display 170, and also displays a guide display indicating a position where a specific part of a face should exist in a transmission image, in such a way as to be superposed on the image.

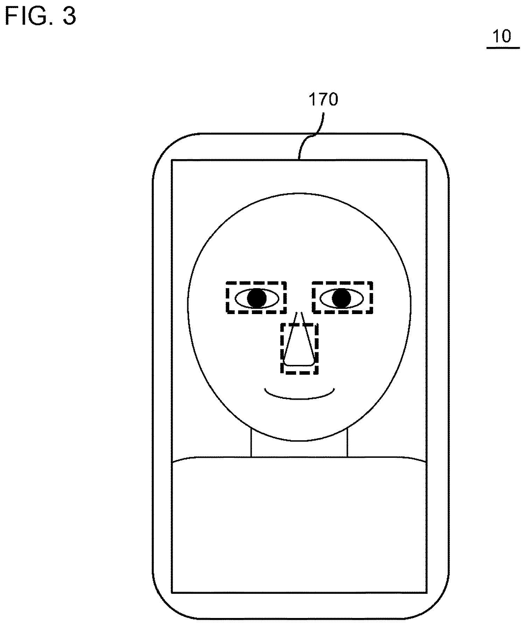

Fig. 3 illustrates one example of a screen displayed on the display 170 of the mobile terminal 10. As described above, when the imaging sensor 140 of the mobile terminal 10 generates a transmission image, the guide display unit 160 of the mobile terminal 10 causes the display 170 to perform displaying a guide. The guide display is displayed together with an image generated by the imaging sensor 140. In detail, when generating a transmission image, the imaging sensor 140 repeatedly generates images at a constant frame rate. At each time an image is generated, the guide display unit 160 displays the image on the display 170. At this occasion, the guide display unit 160 superposes the guide display on the image. Herein, the guide display indicates a position where a specific part of a face (e.g., at least one of an eye, a nose, and a mouth) should exist in a transmission image. Thereby, a user of the mobile terminal 10 can cause a position of his/her face with respect to the mobile terminal 10 to be in an appropriate state.

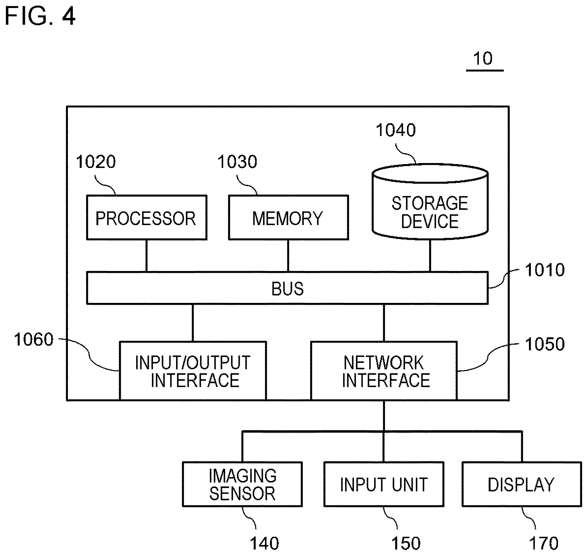

Fig. 4 is a diagram illustrating a hardware configuration example of the mobile terminal 10. The mobile terminal 10 includes a bus 1010, a processor 1020, a memory 1030, a storage device 1040, an input/output interface 1050, and a network interface 1060.

The bus 1010 is a data transmission path for the processor 1020, the memory 1030, the storage device 1040, the input/output interface 1050, and the network interface 1060 to transmit and receive data mutually. However, a method of connecting the processor 1020 and the like with one another is not limited to bus connection.

The processor 1020 is a processor achieved by a central processing unit (CPU), a graphics processing unit (GPU), and the like.

The memory 1030 is a main storage achieved by a random access memory (RAM) and the like.

The storage device 1040 is an auxiliary storage achieved by a hard disk drive (HDD), a solid state drive (SSD), a memory card, a read only memory (ROM), or the like. The storage device 1040 stores a program module that achieves each of functions of the mobile terminal 10 (e.g., the angle acquisition unit 110, the transmission unit 120, the input unit 150, and the guide display unit 160). The processor 1020 reads each of the program modules into the memory 1030 and executes each of the program modules, and thereby each of the functions related to each of the program modules is achieved.

The input/output interface 1050 is an interface for connecting a principal part of the mobile terminal 10 and various input/output equipment. For example, the angle sensor 130, the imaging sensor 140, and the display 170 communicate with another element of the mobile terminal 10 (e.g., the processor 1020) via the input/output interface 1050.

The network interface 1060 is an interface for connecting the mobile terminal 10 to a network. The network is, for example, a local area network (LAN) or a wide area network (WAN). A method in which the network interface 1060 connects to a network may be wireless connection or wired connection. The mobile terminal 10 may communicate with the authentication processing apparatus 20 via the network interface 1060.

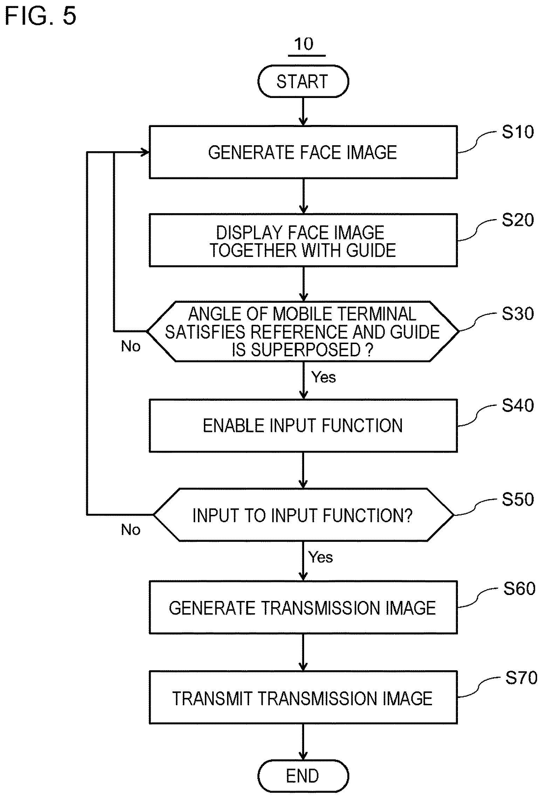

Fig. 5 is a flowchart illustrating one example of processing performed by the mobile terminal 10. During the processing illustrated in Fig. 5, the angle sensor 130 continuously measures an angle of the mobile terminal 10. Further, Fig. 5 illustrates a case where the transmission information is a transmission image. However, even when the transmission information is a feature value, processing similar to Fig. 5 is performed except that processing in which the transmission unit 120 generates a feature value from a transmission image is added.

A user of the mobile terminal 10 activates the imaging sensor 140. Thereby, imaging sensor 140 repeatedly generates images (step S10). A resolution of an image at this occasion may be lower than a resolution of a transmission image.

When the imaging sensor 140 generates an image, the guide display unit 160 of the mobile terminal 10 displays the image on the display 170, together with a guide (step S20). Further, at each time the imaging sensor 140 generates an image, the angle acquisition unit 110 of the mobile terminal 10 acquires a value detected at that time by the angle sensor 130, that is, an angle of the mobile terminal 10. Further, when the angle of the mobile terminal 10 satisfies a first reference and a position of a specific part of a face included in the image satisfies a second reference, for example, when the specific part overlaps the guide (step S30: Yes), the transmission unit 120 causes the transmission unit 120 to acquire a transmission image.

As one example, the determination unit 122 of the mobile terminal 10 enables input to a button for causing the imaging sensor 140 to generate a transmission image, that is, a function for a user to input an instruction for causing the imaging sensor 140 to generate an image (step S40). For example, when the mobile terminal 10 includes a button, the determination unit 122 enables input to the button. Alternatively, when the display 170 includes a touch panel, the determination unit 122 displays a button on the touch panel and enables input to the button. Further, when an input, for example, an operation of pressing an imaging button, is performed by a user (step S50: Yes), the imaging sensor 140 generates a transmission image (step S60), and the transmission unit 120 transmits the image to the authentication processing apparatus 20, as the transmission image (step S70).

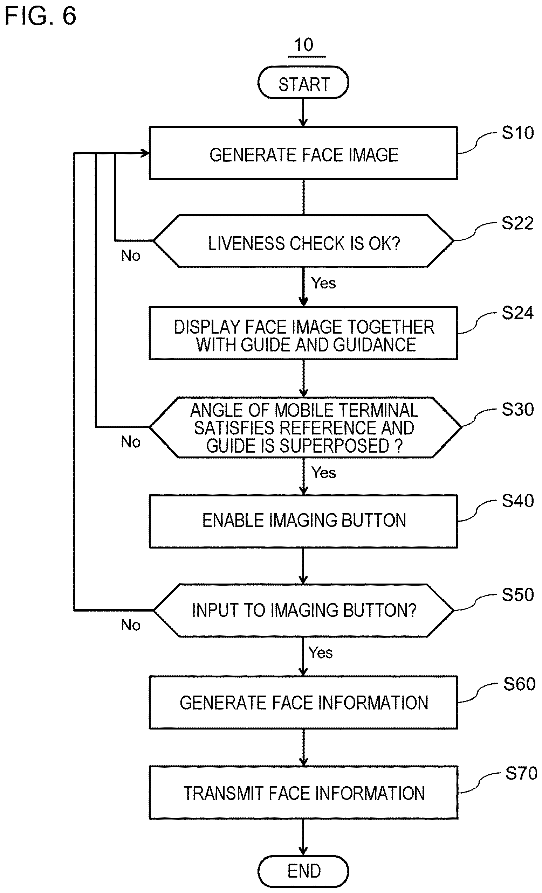

Fig. 6 is a flowchart illustrating a modification example of Fig. 5. Also, in the example illustrated in Fig. 6, the angle sensor 130 continuously measures an angle of the mobile terminal 10. Further, the imaging sensor 140 repeatedly generates images (step S10).

Further, the transmission unit 120 processes a plurality of images generated by the imaging sensor 140, and thereby executes processing (hereinafter, referred to as liveness check processing) for checking that a face is present on site (step S20).

In a first example, the transmission unit 120 compares the plurality of images, detects that there is a change in a shadow of a face in the images, and thereby checks that the face exists on site. In a second example, the transmission unit 120 compares the plurality of images, and when there is a movement of an eyeball in the images, that is, by detecting that there is a change in a direction of the eyeball, checks that the face exists on site. In a third example, the transmission unit 120 compares the plurality of images, detects that there is a change in a relative angle between a face and a torso in the images, and thereby checks that the face exists on site.

When the liveness check processing succeeds (step S22: Yes), the transmission unit 120 displays the image generated by the imaging sensor 140 on the display 170, together with the guide and a guidance (step S24). The guide to be displayed herein is similar that in the step S20 in Fig. 5. Further, the guidance to be displayed herein is information for causing the angle of the mobile terminal 10 to be closer to the first reference. One example of the guidance is a value indicating a difference between the current angle of the mobile terminal 10 and the first reference. Note that, step S22 and step S24 may be performed in parallel.

The processing thereafter (steps S30 to S70) is similar to the example illustrated in Fig. 5.

According to the present example embodiment, the transmission unit 120 transmits, to the authentication processing apparatus 20, an image generated when an angle of the mobile terminal 10 satisfies a reference, as a transmission image. Therefore, there is a high possibility that light is applied to a face of a user when the transmission image is generated. Accordingly, the transmission unit 120 is capable of transmitting a high-quality transmission image to the generated authentication processing apparatus 20.

Further, in the example illustrated in Fig. 6, the transmission unit 120 performs the liveness check processing. Therefore, even when the imaging sensor 140 captures a face image printed on paper or a face image displayed on a display, the transmission unit 120 does not use the face image as a transmission image. Therefore, reliability of the transmission image is high.

### [Second Example Embodiment]

In the first example embodiment, whether an angle of a mobile terminal 10 satisfies a first reference is determined by the mobile terminal 10. In comparison to this, in the present example embodiment, the determination is performed by an authentication processing apparatus 20.

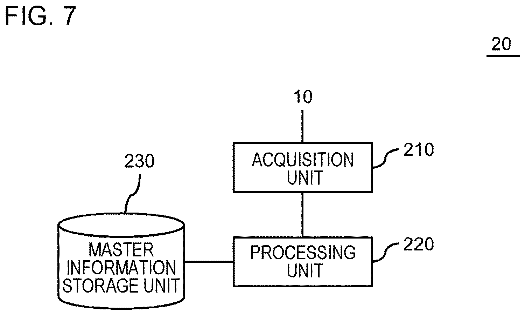

Fig. 7 illustrates one example of a functional configuration of an authentication processing apparatus 20 according to the present example embodiment. In the example illustrated in Fig. 7, the authentication processing apparatus 20 includes an acquisition unit 210 and a processing unit 220. The acquisition unit 210 acquires, from the mobile terminal 10, at least either of transmission information, that is, a transmission image, or a feature value, and an angle of the mobile terminal 10 in a vertical direction when the transmission image is generated. When the angle of the mobile terminal 10 satisfies a reference, the processing unit 220 executes authentication processing of a face using the transmission information or registration processing of master information for authentication using the transmission information. The master information may be a transmission image, a feature value of a face, or both the transmission image and the feature value. The master information is registered in a master information storage unit 230.

Note that, a hardware configuration of the authentication processing apparatus 20 is similar to the hardware configuration of the mobile terminal 10 illustrated in Fig. 4. Further, a storage device 1040 stores a program module that achieves each of functions of the authentication processing apparatus 20 (e.g., the acquisition unit 210 and the processing unit 220). A processor 1020 reads each of the program modules into a memory 1030 and executes each of the program modules, and thereby each of the functions related to each of the program modules is achieved. Further, the storage device 1040 also functions as the master information storage unit 230.

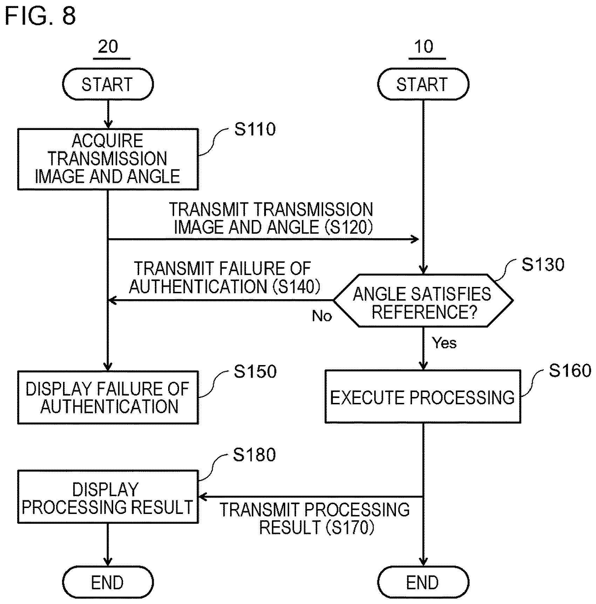

Fig. 8 is a flowchart illustrating one example of processing performed by the mobile terminal 10 and the authentication processing apparatus 20 in the present example embodiment. In Fig. 8, description is made with an assumption that the transmission information is a transmission image.

First, a user of the mobile terminal 10 activates an imaging sensor 140, causes a transmission unit 120 to acquire a transmission image, as well as to acquire an angle of the mobile terminal 10 when the transmission image is generated (step S 110). The transmission unit 120 transmits the acquired transmission image and the angle of the mobile terminal 10 to the mobile terminal 10 (step S120).

The acquisition unit 210 of the authentication processing apparatus 20 acquires the transmission image and the angle of the mobile terminal 10. Then, the processing unit 220 of the authentication processing apparatus 20 determines whether the angle of the mobile terminal 10 satisfies a first reference (step S130). When the angle of the mobile terminal 10 does not satisfy the first reference (step S130: No), the processing unit 220 transmits, to the mobile terminal 10, to the effect that authentication of the transmission image has failed (step S140). The mobile terminal 10 causes a display 170 to perform display indicating that the authentication of the transmission image has failed (step S150).

On the other hand, when the angle of the mobile terminal 10 satisfies the first reference (step S130: Yes), the processing unit 220 performs processing using the transmission image (step S 160). The processing is, as described above, authentication processing of a face using the transmission image or registration processing of master information for authentication using the transmission image. After that, the processing unit 220 transmits a processing result of the transmission image to the mobile terminal 10 (step S170). The mobile terminal 10 displays the processing result of the transmission image on the display 170 (step S 180).

According to the present example embodiment, the processing unit 220 of the authentication processing apparatus 20 performs processing by using a transmission image when an angle of the mobile terminal 10 satisfies the first reference. Therefore, reliability of a processing result becomes high.

In the above, the example embodiments have been described with reference to the drawings, but the example embodiments are some non-limiting embodiments, and various configurations other than the above-described configurations may also be adopted.

Further, in the plurality of flowcharts used in the above description, a plurality of steps (pieces of processing) are described in order, but an order of execution of the steps executed in each of the example embodiments is not limited to the described order. In each of the example embodiments, the order of the illustrated steps may be changed within a range that does not hinder contents of the steps. Further, the above-described example embodiments may be combined as long as contents of the example embodiments do not conflict with each other.

A part or the whole of the above-described example embodiments may be described as the following supplementary notes, but are not limited thereto.
1. A program executed by a mobile terminal including an imaging means, and causing the mobile terminal to have:
   an angle acquisition function of acquiring an angle of the mobile terminal in a vertical direction; and
   a transmission function of transmitting, to a server, transmission information including at least either of a transmission image that is generated by the imaging means, when the angle satisfies a first reference, and includes a human face or a feature value of the face generated from the transmission image.
2. The program according to supplementary note 1, further causing the mobile terminal to have
   a determination function of enabling, when the angle satisfies the first reference, an input function for allowing a user to input an instruction for causing the imaging means to generate an image, wherein
   the transmission function uses an image captured after the input function is enabled, as the transmission image.
3. The program according to supplementary note 1 or 2, wherein
   the first reference is that the angle is equal to or more than 70 degrees and equal to or less than 110 degrees, with respect to a horizontal plane.
4. The program according to any one of supplementary notes 1 to 3, further causing the mobile terminal to have
   a guide display function of displaying, on a screen of the mobile terminal, an image generated by the imaging means and a guide display indicating a position where a specific part of a face should exist in the transmission image, in such a way the image and the guide display are superposed on each other, wherein,
   when the angle satisfies a first reference and a position of the specific part in the image satisfies a second reference, the transmission function acquires a transmission image.
5. The program according to any one of supplementary notes 1 to 4, wherein
   the transmission function generates, based on a difference between the first reference and the angle, a guidance for causing the angle of the mobile terminal 10 to be closer to the first reference, and outputs the guidance.
6. The program according to any one of supplementary notes 1 to 5, wherein
   the imaging means repeatedly generates the images until the transmission image is generated,
   the program further causing the mobile terminal to have
   a liveness check function of checking that the face exists on site, by detecting a change in a shadow of the face in the repeatedly generated images.
7. The program according to any one of supplementary notes 1 to 5, wherein
   the imaging means repeatedly generates the images until the transmission image is generated,
   the program further causing the mobile terminal to have
   a liveness check function of checking that the face exists on site, by detecting a movement of an eyeball in the repeatedly generated images.
8. The program according to any one of supplementary notes 1 to 5, wherein
   the imaging means repeatedly generates the images until the transmission image is generated,
   the program further causing the mobile terminal to have
   a liveness check function of checking that the face exists on site, by detecting a change in a relative angle between a face and a torso in the repeatedly generated images.
9. A program causing a computer to have:
   a function of acquiring, from a mobile terminal including an imaging means, transmission information including at least either of a transmission image including a face or a feature value of the face generated from the transmission image, and an angle of the mobile terminal in a vertical direction when the transmission image is generated; and
   a function of executing, when the angle satisfies a reference, authentication processing of the face using the transmission information or registration processing of master information for authentication using the transmission information.
10. A mobile terminal including:
   an imaging means for generating an image;
   an angle acquisition means for acquiring an angle of the mobile terminal in a vertical direction; and
   a transmission means for transmitting, to a sever, transmission information including at least either of a transmission image that is generated by the imaging means, when the angle satisfies a first reference, and includes a human face or a feature value of the face generated from the transmission image.
11. The mobile terminal according to supplementary note 10, further including
   a determination means for enabling, when the angle satisfies the first reference, an input function for allowing a user to input an instruction for causing the imaging means to generate an image, wherein
   the transmission means uses an image captured after the input function is enabled, as the transmission image.
12. The mobile terminal according to supplementary note 10 or 11, wherein
   the first reference is that the angle is equal to or more than 70 degrees and equal to or less than 110 degrees, with respect to a horizontal plane.
13. The mobile terminal according to any one of supplementary notes 10 to 12, further including
   a guide display means for displaying, on a screen of the mobile terminal, an image generated by the imaging means and a guide display indicating a position where a specific part of a face should exist in the transmission image, in such a way that the image and the guide display are superposed on each other, wherein,
   when the angle satisfies a first reference and a position of the specific part in the image satisfies a second reference, the transmission means acquires a transmission image.
14. The mobile terminal according to any one of supplementary notes 10 to 13, wherein
   the transmission means generates, based on a difference between the first reference and the angle, a guidance for causing the angle of the mobile terminal to be closer to the first reference, and output the guidance.
15. The mobile terminal according to any one of supplementary notes 10 to 14, wherein
   the imaging means repeatedly generates the images until the transmission image is generated,
   the mobile terminal further including
   a liveness check means for checking that the face exists on site, by detecting a change in a shadow of the face in the repeatedly generated images.
16. The mobile terminal according to any one of supplementary notes 10 to 14, wherein
   the imaging means repeatedly generates the images until the transmission image is generated,
   the mobile terminal further including
   a liveness check means for checking that the face exists on site, by detecting a movement of an eyeball in the repeatedly generated images.
17. The mobile terminal according to any one of supplementary notes 10 to 14, wherein
   the imaging means repeatedly generates the images until the transmission image is generated,
   the mobile terminal further including
   a liveness check means for checking that a face exists on site, by detecting a change in a relative angle between the face and a torso in the repeatedly generated images.
18. An authentication processing apparatus including:
   an acquisition means for acquiring, from a mobile terminal including an imaging means, transmission information including at least either of a transmission image including a face or a feature value of the face generated from the transmission image, and an angle of the mobile terminal in a vertical direction when the transmission image is generated; and
   a processing means for executing, when the angle satisfies a reference, authentication processing of the face using the transmission information or registration processing of master information for authentication using the transmission information.
19. An image transmission method including:
   by a mobile terminal,
   generating an image, and acquiring an angle of the mobile terminal in a vertical direction; and
   transmitting, to a server, transmission information including at least either of a transmission image that is generated by the imaging means, when the angle satisfies a first reference, and includes a human face or a feature value of the face generated from the transmission image.
20. The image transmission method according to supplementary note 19, further including:
   by the mobile terminal,
   enabling, when the angle satisfies the first reference, an input function for allowing a user to input an instruction for causing the imaging means to generate an image; and
   using an image captured after the input function is enabled, as the transmission image.
21. The image transmission method according to supplementary note 19 or 20, wherein
   the first reference is that the angle is equal to or more than 70 degrees and equal to or less than 110 degrees, with respect to a horizontal plane.
22. The image transmission method according to any one of supplementary notes 19 to 21, further including:
   by the mobile terminal,
   displaying, on a screen of the mobile terminal, an image generated by the imaging means and a guide display indicating a position where a specific part of a face should exist in the transmission image, in such a way that the image and the guide display are superposed on each other; and
   acquiring, when the angle satisfies a first reference and a position of the specific part in the image satisfies a second reference, a transmission image.
23. The image transmission method according to any one of supplementary notes 19 to 22, further including,
   by the mobile terminal,
   generating, based on a difference between the first reference and the angle, a guidance for causing the angle of the mobile terminal to be closer to the first reference, and outputting the guidance.
24. The image transmission method according to any one of supplementary notes 19 to 23, further including:
   by the mobile terminal,
   repeatedly generating the images until the transmission image is generated; and
   checking that the face exists on site, by detecting a change in a shadow of the face in the repeatedly generated images.
25. The image transmission method according to any one of supplementary notes 19 to 23, further including:
   by the mobile terminal,
   repeatedly generating the images until the transmission image is generated; and
   checking that the face exists on site, by detecting a movement of an eyeball in the repeatedly generated images.
26. The image transmission method according to any one of supplementary notes 19 to 23, further including:
   by the mobile terminal,
   repeatedly generating the images until the transmission image is generated; and
   checking that a face exists on site, by detecting a change in a relative angle between the face and a torso in the repeatedly generated images.
27. An authentication processing method including:
   by a computer,
   acquiring, from a mobile terminal including an imaging means, transmission information including at least either of a transmission image including a face or a feature value of the face generated from the transmission image, and an angle of the mobile terminal in a vertical direction when the transmission image is generated; and
   executing, when the angle satisfies a reference, authentication processing of the face using the transmission information or registration processing of master information for authentication using the transmission information.

### REFERENCE SIGNS LIST

- 10: Mobile Terminal
- 20: Authentication Processing Apparatus
- 110: Angle Acquisition Unit
- 120: Transmission Unit
- 130: Angle Sensor
- 140: Imaging Sensor
- 150: Input Unit
- 160: Guide Display Unit
- 170: Display
- 210: Acquisition Unit
- 220: Processing Unit
- 230: Master Information Storage Unit

## Claims

1. A program executed by a mobile terminal including an imaging means, and causing the mobile terminal to have:
an angle acquisition function of acquiring an angle of the mobile terminal in a vertical direction; and
a transmission function of transmitting, to a server, transmission information including at least either of a transmission image that is generated by the imaging means, when the angle satisfies a first reference, and includes a human face or a feature value of the face generated from the transmission image.

2. The program according to claim 1, further causing the mobile terminal to have
a determination function of enabling, when the angle satisfies the first reference, an input function for allowing a user to input an instruction for causing the imaging means to generate an image, wherein
the transmission function uses an image captured after the input function is enabled, as the transmission image.

3. The program according to claim 1 or 2, wherein
the first reference is that the angle is equal to or more than 70 degrees and equal to or less than 110 degrees, with respect to a horizontal plane.

4. The program according to any one of claims 1 to 3, further causing the mobile terminal to have
a guide display function of displaying, on a screen of the mobile terminal, an image generated by the imaging means and a guide display indicating a position where a specific part of a face should exist in the transmission image, in such a way that the image and the guide display are superposed on each other, wherein,
when the angle satisfies a first reference and a position of the specific part in the image satisfies a second reference, the transmission function acquires a transmission image.

5. The program according to any one of claims 1 to 4, wherein
the transmission function generates, based on a difference between the first reference and the angle, a guidance for causing the angle of the mobile terminal to be closer to the first reference, and outputs the guidance.

6. The program according to any one of claims 1 to 5, wherein
the imaging means repeatedly generates the images until the transmission image is generated,
the program further causing the mobile terminal to have
a liveness check function of checking that the face exists on site, by detecting a change in a shadow of the face in the repeatedly generated images.

7. The program according to any one of claims 1 to 5, wherein
the imaging means repeatedly generates the images until the transmission image is generated,
the program further causing the mobile terminal to have
a liveness check function of checking that the face exists on site, by detecting a movement of an eyeball in the repeatedly generated images.

8. The program according to any one of claims 1 to 5, wherein
the imaging means repeatedly generates the images until the transmission image is generated,
the program further causing the mobile terminal to have
a liveness check function of checking that the face exists on site, by detecting a change in a relative angle between the face and a torso in the repeatedly generated images.

9. A program causing a computer to have:
a function of acquiring, from a mobile terminal including an imaging means, transmission information including at least either of a transmission image including a face or a feature value of the face generated from the transmission image, and an angle of the mobile terminal in a vertical direction when the transmission image is generated; and
a function of executing, when the angle satisfies a reference, authentication processing of the face using the transmission information or registration processing of master information for authentication using the transmission information.

10. A mobile terminal comprising:
an imaging means for generating an image;
an angle acquisition means for acquiring an angle of the mobile terminal in a vertical direction; and
a transmission means for transmitting, to a sever, transmission information including at least either of a transmission image that is generated by the imaging means, when the angle satisfies a first reference, and includes a human face or a feature value of the face generated from the transmission image.

11. An authentication processing apparatus comprising:
an acquisition means for acquiring, from a mobile terminal including an imaging means, transmission information including at least either of a transmission image including a face or a feature value of the face generated from the transmission image, and an angle of the mobile terminal in a vertical direction when the transmission image is generated; and
a processing means for executing, when the angle satisfies a reference, authentication processing of the face using the transmission information or registration processing of master information for authentication using the transmission information.

12. An image transmission method comprising:
by a mobile terminal,
generating an image, and acquiring an angle of the mobile terminal in a vertical direction; and
transmitting, to a server, transmission information including at least either of a transmission image that is generated by the imaging means, when the angle satisfies a first reference, and includes a human face or a feature value of the face generated from the transmission image.

13. An authentication processing method comprising:
by a computer,
acquiring, from a mobile terminal including an imaging means, transmission information including at least either of a transmission image including a face or a feature value of the face generated from the transmission image, and an angle of the mobile terminal in a vertical direction when the transmission image is generated; and
executing, when the angle satisfies a reference, authentication processing of the face using the transmission information or registration processing of master information for authentication using the transmission information.
